# EUROPÄISCHE PATENTSCHRIFT

(11) **EP 3 384 069 B1**
(45) Veröffentlichungstag und Bekanntmachung des Hinweises auf die Patenterteilung: **24.07.2019**
(21) Anmeldenummer: 17707780.7
(22) Anmeldetag: 20.02.2017
(51) Int. Cl.: C25B 1/00, C25B 1/10, C25B 9/08, C25B 15/08

(54) **VERFAHREN UND VORRICHTUNG ZUR ELEKTROCHEMISCHEN NUTZUNG VON KOHLENSTOFFDIOXID**
METHOD AND DEVICE FOR THE ELECTROCHEMICAL UTILIZATION OF CARBON DIOXIDE
PROCÉDÉ ET DISPOSITIF POUR L'UTILISATION ÉLECTROCHIMIQUE DE DIOXYDE DE CARBONE

(30) Priorität: 24.02.2016 DE 102016202840
(43) Veröffentlichungstag der Anmeldung: 10.10.2018
(73) Patentinhaber: Siemens Aktiengesellschaft, 80333 München (DE)
(72) Erfinder: STARK, Katharina, 91052 Erlangen (DE); BALDAUF, Manfred, 91056 Erlangen (DE); HANEBUTH, Marc, 90482 Nürnberg (DE)
(86) Internationale Anmeldenummer: PCT/EP2017/053742
(87) Internationale Veröffentlichungsnummer: WO 2017/144395

(56) Entgegenhaltungen:
- JP-A- 2002 302 784
- JP-A- 2015 168 836
- US-A1- 2012 090 989
- US-A1- 2013 118 909
- US-A1- 2013 199 937

## Beschreibung

Die vorliegende Erfindung betrifft ein Verfahren und eine Vorrichtung zur elektrochemischen Verwertung von Kohlenstoffdioxid. Kohlenstoffdioxid wird in eine Elektrolysezelle eingeleitet und an einer Kathode reduziert.

Die Nachfrage nach Strom schwankt im tageszeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Aber auch die Elektrolyse von Kohlenstoffdioxid zu Kohlenstoffmonoxid wird seit einigen Jahren erforscht und es gibt Bemühungen, ein elektrochemisches System zu entwickeln, das eine Kohlenstoffdioxidmenge entsprechend des wirtschaftlichen Interesses reduzieren kann. Aktuell werden ca. 80 % des weltweiten Energiebedarfs durch die Verbrennung von fossilen Brennstoffen gedeckt, deren Verbrennungsprozesse eine weltweite Emission von etwa 34.000 Millionen Tonnen Kohlenstoffdioxid in die Atmosphäre pro Jahr verursacht. Kohlenstoffdioxid gehört zu den sogenannten Treibhausgasen, deren negative Auswirkungen auf die Atmosphäre und das Klima diskutiert werden. Eine Verwertung dieses Kohlenstoffdioxids ist daher wünschenswert.

US 2013/199937 A1, US 2013/118909 A1, JP 2015 168836 A, JP 2002 302784 A und US 2012/090989 A1 offenbaren bestimmte Elektrolyseverfahren.

Eine vorteilhafte Bauform einer Elektrolyseeinheit ist ein Niedertemperatur-Elektrolyseur bei dem als Eduktgas Kohlenstoffdioxid mit Hilfe einer Gasdiffusionselektrode in einen Kathodenraum zudosiert wird. An einer Kathode der elektrochemischen Zelle wird das Kohlenstoffdioxid zu Kohlenstoffmonoxid reduziert und an einer Anode wird Wasser zu Sauerstoff oxidiert. Aufgrund von Diffusionslimitierungen an der Kathode kann es beim Einsatz eines wässrigen Elektrolyten neben der Bildung von Kohlenstoffmonoxid auch zur Bildung von Wasserstoff kommen, da das Wasser des wässrigen Elektrolyten ebenfalls elektrolysiert wird. Der Kathodenraum und der Anodenraum werden vorteilhaft durch eine Membran getrennt, um die entstehenden Produktgase, auf Kathodenseite das Kohlenstoffmonoxid bzw. Wasserstoff und auf Anodenseite Sauerstoff, getrennt voneinander aus der Elektrolysezelle zu führen, um gegenseitige Verunreinigung zu verhindern.

Während der Elektrolyse kommt es mit dem Transport von Kationen, insbesondere von Wasserstoffionen durch die Membran zu einem gleichzeitigen Transport von Wassermolekülen. Es permeiren dabei pro Kation drei bis zehn Wassermoleküle von der Anodenseite auf die Kathodenseite. Der wässrige Elektrolyt verarmt daher anodenseitig an Wasser, während der wässrige Elektrolyt kathodenseitig immer weiter mit Wasser verdünnt wird, so dass hier die Leitfähigkeit nachteilig erheblich sinkt. Nachteilig vergrößern sich im Katholyt ohmsche Spannungsverluste, was einen dauerhaften kontinuierlichen Betrieb verhindert.

Aufgabe der vorliegenden Erfindung ist es daher, ein Verfahren und eine Vorrichtung anzugeben, welche einen dauerhaften kontinuierlichen Betrieb des Kohlenstoffdioxid-Elektrolyseurs mit ausreichend hoher Leitfähigkeit des Elektrolyten, insbesondere des Katholyten, ermöglicht.

Die Aufgabe wird mit dem Verfahren gemäß Anspruch 1 zur elektrochemischen Nutzung von Kohlenstoffdioxid und mit einer Elektrolysevorrichtung gemäß Anspruch 8 gelöst.

Das erfindungsgemäße Verfahren zur elektrochemischen Nutzung von Kohlenstoffdioxid umfasst folgende Schritte: Zunächst wird eine Elektrolysezelle bereitgestellt, wobei die Elektrolysezelle eine Membran umfasst, welche einen Anodenraum von einem Kathodenraum trennt. Es wird dann ein erster wässriger Elektrolyt als Katholyt in den Kathodenraum und ein zweiter wässriger Elektrolyt als Anolyt in den Anodenraum geführt.

Das Kohlenstoffdioxid wird dann zu einem Produktgas umfassend Kohlenstoffmonoxid im Kathodenraum reduziert. Das Produktgas und der Katholyt werden dann in eine erste Abtrennvorrichtung geführt. In der ersten Abtrennvorrichtung wird das Produktgas aus dem Katholyt abgetrennt. Der Katholyt wird dann in eine zweite Abtrennvorrichtung geführt. Dort wird der während der Reduktion von Kohlenstoffdioxid mit Wasser aus dem Anolyt angereicherte Katholyt mittels eines Strippgases in der zweiten Abtrennvorrichtung von diesem überschüssigen Wasser getrennt. In einer dritten Abtrennvorrichtung wird anschließend das Wasser aus dem Strippgas abgetrennt. Dieses Wasser wird anschließend zurück aus der dritten Abtrennvorrichtung in den Anodenraum geführt. Als Strippgas wird ein Kohlenstoffdioxid umfassendes Eduktgas und/oder das Produktgas der Elektrolysezelle verwendet.

Die erfindungsgemäße Elektrolysevorrichtung zum Reduzieren von Kohlenstoffdioxid zu Kohlenstoffmonoxid umfasst eine Elektrolysezelle, wobei die Elektrolysezelle eine Membran umfasst, welche einen Anodenraum von einem Kathodenraum trennt. Sie umfasst weiterhin eine erste Leitung in den Kathodenraum zum Führen eines ersten Elektrolyten als Katholyt in den Kathodenraum. Sie umfasst weiterhin eine zweite Leitung in den Anodenraum zum Führen eines zweiten Elektrolyten als Anolyt in den Anodenraum. Die Elektrolysevorrichtung umfasst weiterhin eine erste Abtrennvorrichtung zum Abtrennen eines Produktgases, umfassend Kohlenstoffmonoxid, von dem Katholyt. Sie umfasst weiter eine zweite Abtrennvorrichtung zum Abtrennen von überschüssigem Wasser des Katholyts mittels eines Strippgases in einer zweiten Abtrennvorrichtung. Sie umfasst weiterhin eine dritte Abtrennvorrichtung zum Abtrennen des Wassers aus dem Strippgas. Weiterhin umfasst die Elektrolysevorrichtung eine dritte Leitung von der dritten Abtrennvorrichtung zum Anodenraum der Elektrolysezelle zum Zurückführen des Wassers in den Anodenraum. Die zweite Abtrennvorrichtung ist mit einer sechsten Leitung zum Führen des Eduktgases als Strippgas in die zweite Abtrennvorrichtung oder mit einer vierzehnten Leitung zum Führen des Produktgases als Strippgas in die zweite Abtrennvorrichtung verbunden.

Die erste Abtrennvorrichtung ist dabei typischerweise ein Abscheidebehälter. In dem Abscheidebehälter werden gasförmige von flüssigen Komponenten getrennt. Die dritte Abtrennvorrichtung ist typischerweise ein Kondensator, in dem das Wasser aus dem Strippgas kondensiert wird. Insbesondere werden wenigstens zwei Membranen als Membranstacks in der Elektrolysezelle verwendet.

Vorteilhaft wird bei dem Verfahren der mit Wasser verdünnte Katholyt mit Hilfe eines Strippgases von dem überschüssigen Wasser abgetrennt. Der Katholyt wird also wieder aufkonzentriert, wodurch dessen Leitfähigkeit vorteilhaft erhöht wird. Ein kontinuierlicher Betrieb des Kohlenstoffdioxid-Elektrolyseurs ist auf diese Weise möglich. Weiterhin ist der Betrieb des Kohlenstoffdioxid-Elektrolyseurs wirtschaftlicher im Vergleich zu einem nicht kontinuierlichen Betrieb. Verdünnungseffekte durch das Wasser werden vorteilhaft vermieden, so dass die Leitfähigkeit des Katholyts auf ausreichend hohem Niveau bleibt, um den Betrieb kontinuierlich zu gewährleisten. Eine alleinige Wasserabtrennung in der ersten Abtrennvorrichtung, in der das Produktgas aus dem Katholyt abgetrennt wird, ist nicht ausreichend. Dabei wird schätzungsweise nur maximal ein Achtel der nötigen Menge Wasser aus dem Prozess ausgetragen. Damit verbleibt weiterhin ein überwiegender Teil des Wassers, das durch die Membran gegangen ist, in dem Katholyt.

Eine zweite Abtrennvorrichtung ermöglicht vorteilhaft das Abtrennen eines ausreichend großen Wasseranteils aus dem Katholyt, um die Leitfähigkeit des Katholyts auf einem ausreichend hohen Wert zu halten. Die dritte Abtrennvorrichtung ermöglicht vorteilhaft das Zurückgewinnen des Wassers aus dem Strippgas, um es in den Elektrolyseprozess zurückzuführen und insbesondere im Anolytraum wieder zu verwenden. Auch das Strippgas wird getrocknet und kann im Prozess wieder verwendet werden.

Als Strippgas wird ein Kohlenstoffdioxid umfassendes Eduktgas und/oder das ebenfalls noch nicht umgesetztes Kohlenstoffdioxid umfassende Produktgas der Elektrolysezelle verwendet. Vorteilhaft wird dabei der Einsatz eines weiteren Strippgases vermieden. Kohlenstoffdioxid liegt sowohl im Edukt- als auch im Produktgas vor und kann ideal als Strippgas für das Wasser verwendet werden.

Das Edukt- oder Produktgas als Strippgas kann vorteilhaft im Kreis, also zurück in die Elektrolysezelle nach dem Strippen, geführt werden, so dass etwaige Produktgaskomponenten, die in die Gasphase entwichen sind, wieder zurück in den Elektrolyseur geführt werden und somit vorteilhaft nicht verloren gehen. Weiterhin ist bei der Verwendung des Edukt- oder Produktgases als Strippgas vorteilhaft keine zusätzliche Kühlung des Katholyts nach der Elektrolysezelle oder alternativ nur eine Kühlvorrichtung mit geringer Leistung zum Kühlen des Katholyts der Elektrolysezelle notwendig. Das mit Wasser gesättigte Strippgas verlässt die zweite Vorrichtung und wird in der dritten Vorrichtung, insbesondere einem Gas-Flüssig-Separator, zu Kondensat und einer Gasphase getrennt. Die Wärme des Katholyts wird somit vorteilhaft über das Strippgas und diesen Kondensator ausgetragen.

In einer weiteren vorteilhaften Ausgestaltung und Weiterbildung der Erfindung wird der Volumenstrom des Strippgases mit Hilfe wenigstens einer Gebläseeinheit erhöht. Eine Gebläseeinheit erhöht vorteilhaft den Volumenstrom, so dass der Volumenstrom des Eduktgases und/oder des Produktgases derart erhöht wird, dass alleine dieser Volumenstrom als Strippgas das Wasser in ausreichender Menge aus dem Katholyt abtrennt.

Die Gebläseeinheit ist typischerweise in einer das Strippgas führenden Leitung angeordnet. Das Gebläse ist vorteilhaft derart angeordnet, dass ein Teil des Kohlenstoffdioxids des Edukt- oder Produktgases entnommen wird und im Kreis geführt wird. Die Gebläseeinheit befindet sich also zweckmäßigerweise innerhalb dieses Stoffkreislaufs.

In einer weiteren vorteilhaften Ausgestaltung und Weiterbildung der Erfindung wird das Strippgas wenigstens teilweise nach dem Abtrennen des Wassers als Eduktgas in die Elektrolysezelle zurückgeführt. Damit werden vorteilhaft Komponenten, die während des Strippens mit in die Gasphase übergegangen sind, aber Wertprodukte darstellen, zurück in die Elektrolysezelle geführt. Sowohl die Komponenten des Produktgases als auch des Eduktgases können als Eduktgas in die Elektrolysezelle zurückgeführt werden. Auch wenn eine Rückführung von Produktgas in einen Eduktstrom Verdünnungseffekte zur Folge haben kann, gibt es dennoch Vorteile, die diese Nachteile aufwiegen. Beispielsweise lässt sich durch eine solche Maßnahme die Selektivität von Kohlenstoffdioxid-Elektrolyseuren bezüglich Kohlenstoffmonoxids erhöhen und die Nebenreaktion zur Bildung von Wasserstoff unterdrücken. Vorteilhaft wird dadurch auch der Verlust von beispielsweise Kohlenstoffmonoxid oder Kohlenstoffdioxid, welches als Edukt verwendet wird, vermieden.

In einer weiteren vorteilhaften Ausgestaltung und Weiterbildung der Erfindung wird das Strippgas vor dem Eintritt in die zweite Abtrennvorrichtung aufgeheizt. Dies ist insbesondere dann nötig, wenn die Temperatur des Katholyts nach der Elektrolysezelle nicht ausreichend hoch ist, um das Strippgas derart vorzuwärmen, dass das Wasser vom Katholyt in das Strippgas übergeht.

In einer weiteren vorteilhaften Ausgestaltung und Weiterbildung der Erfindung wird der von überschüssigem Wasser abgetrennte Katholyt von der zweiten Abtrennvorrichtung zurück in den Kathodenraum geführt. Vorteilhaft wird somit der Katholyt wieder verwendet, so dass die kontinuierliche Zufuhr von neuem zusätzlichen Katholyt in die Elektrolysezelle vermieden wird.

In einer weiteren vorteilhaften Ausgestaltung und Weiterbildung der Erfindung wird aus dem Produktgas, welches aus der ersten Abtrennvorrichtung geführt wird, ein Anteil von maximal ein Achtel des Überschüssigen Wassers mittels eines Kondensators abgetrennt. Dieses Wasser kann vorteilhaft in den Anodenraum zurückgeführt werden. Dabei wird ausgenutzt, dass aufgrund des Phasengleichgewichts in der ersten Abtrennvorrichtung die Gasphase neben dem Produktgas auch Wasser umfasst. So kann vorteilhaft die benötigte Menge an Strippgas in der zweiten Abtrennvorrichtung verringert werden. Es kann entweder ein zusätzlicher Kondensator an der Produktgasleitung nach der ersten Abtrennvorrichtung angeordnet sein oder das Produktgas mit dem Wasser kann in einen Kondensator nach der zweiten Abtrennvorrichtung geführt werden. Dabei werden die beiden Ströme, der Produktgasstrom und das mit Wasser beladene Strippgas, getrennt voneinander parallel durch den Kondensator geführt, so dass es zu keinem Stoffaustausch kommt.

In einer weiteren vorteilhaften Ausgestaltung und Weiterbildung der Erfindung ist die zweite Abtrennvorrichtung eine Pervaporationseinheit, ein Fallfilmverdampfer oder eine Blasensäule. Eine Blasensäule eignet sich vorteilhafterweise dann, wenn nur das Produktgas als Strippgas verwendet wird. In diesem Fall sind dann die erste Abtrennvorrichtung und die zweite Abtrennvorrichtung kombiniert. In dieser Vorrichtung wird zugleich das Produktgas abgeschieden und ein Teil des Wassers aus dem Katholyt gestrippt. Vorteilhafterweise spart dieser Aufbau Komponenten in der Vorrichtung, was zur Einfachheit der Vorrichtung beiträgt und Energie spart.

Die Pervaporationseinheit ist insbesondere dann vorteilhaft, wenn sowohl Produkt- als auch Eduktgas zum Strippen des Wassers aus dem Katholyt verwendet werden. Die Pervaporationseinheit hat den Vorteil, dass in einem relativ kleinen Bauvolumen eine große Fläche für den Kontakt zwischen dem Strippgas und dem Katholyten bereitgestellt werden kann.

Weitere Ausgestaltungsformen und weitere Merkmale der Erfindung werden anhand der folgenden Figuren näher erläutert. dabei handelt es sich um rein beispielhafte Ausgestaltungsformen und Merkmalskombinationen, die keine Einschränkung des Schutzbereichs bedeuten. Merkmale mit derselben Wirkungsweise und derselben Bezeichnung, aber in unterschiedlichen Ausgestaltungsformen werden dabei mit denselben Bezugszeichen versehen. Alle Vorrichtungsmerkmale werden mit Ziffern, alle Komponenten mit Buchstaben bezeichnet.

Dabei zeigen:
- Figur 1: eine schematische Anordnung der Elektrolysevorrichtung, wobei als Strippgas das Eduktgas verwendet wird,
- Figur 2: eine schematische Anordnung der Elektrolysevorrichtung, wobei als Strippgas das Produktgas verwendet wird,
- Figur 3: eine schematische Anordnung der Elektrolysevorrichtung, wobei als Strippgas sowohl das Edukt- als auch das Produktgas verwendet wird.

Während der Elektrolyse kommt es zu dem Transport von Kationen, insbesondere Protonen, und einem gleichzeitigen Transport von Wasser durch die Membran 3. Es werden pro Kation drei bis zehn Moleküle Wasser vom Anodenraum 16 in den Kathodenraum 15 transferiert. Somit verarmt der Anolyt A an Wasser W, während der Katholyt K mit der Zeit verdünnt wird. Die Leitfähigkeit des Katholyts K wird durch die Verdünnung mit Wasser W deutlich verringert, wodurch Ohmsche Spannungsverluste erhöht werden. Um einen dauerhaften Betrieb des Kohlenstoffdioxid-Elektrolyseurs dennoch gewährleisten zu können, muss das Wasser aus dem Katholyt K abgetrennt werden. Anhand der drei Ausführungsbeispiele wird gezeigt, wie das Wasser W effektiv abgetrennt werden kann.

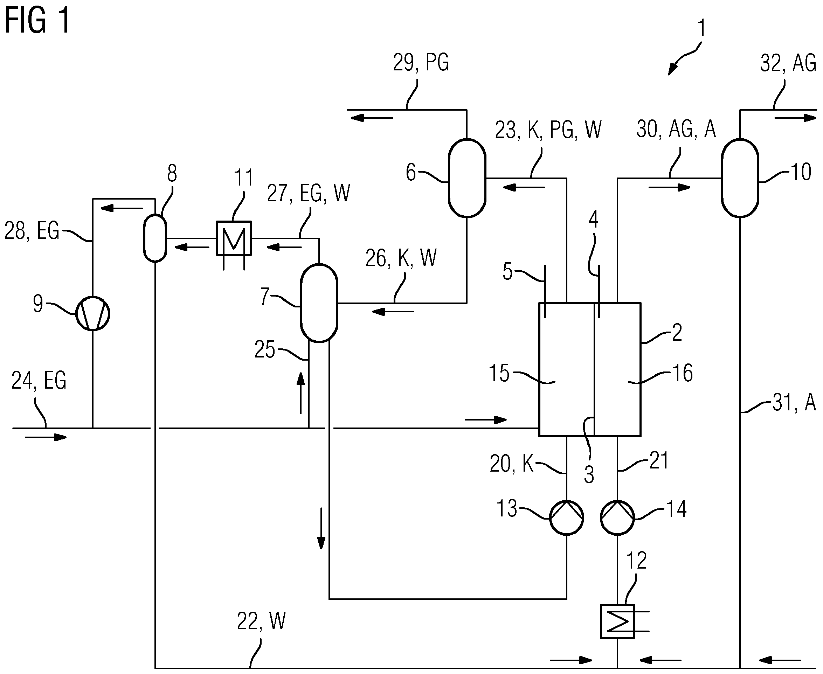

Figur 1 zeigt schematisch eine Elektrolysevorrichtung mit einer Elektrolysezelle 2. Die Elektrolysevorrichtung umfasst eine Membran 3, wobei die Membran 3 einen Kathodenraum 15 von einem Anodenraum 16 trennt. Sie umfasst weiterhin eine Anode 4 und eine Kathode 5. Die Anode 4 ist in dieser Ausgestaltung auf die Membran 3 aufgebracht. Vorteilhaft wird hierdurch die nötige Menge an Anolyt A im Anodenraum 16 verringert. Die Kathode 5 ist vorteilhafterweise eine Gasdiffusions-Elektrode.

Weiterhin umfasst die Elektrolysevorrichtung 1 eine erste Abtrennvorrichtung 6. Die vierte Leitung 23 führt vom Kathodenraum 15 in die erste Abtrennvorrichtung 6. In der vierten Leitung 23 werden der Katholyt K, das Produktgas PG und Wasser W geführt. Die erste Abtrennvorrichtung 6 ist besonders bevorzugt eine Abscheidevorrichtung. Hier wird das gasförmige Produktgas PG vom Katholyt K und Wasser W getrennt. Die zehnte Leitung 29 führt dann das Produktgas PG aus der Elektrolysevorrichtung 1 hinaus. Die siebte Leitung 26 führt den in der ersten Abtrennvorrichtung 6 abgetrennten Katholyt K und das Wasser KW in die zweite Abtrennvorrichtung 7.

Die zweite Abtrennvorrichtung 7 ist in diesem Beispiel als ein Fallfilmverdampfer ausgestaltet. Die sechste Leitung 25 führt abzweigend von der fünften Leitung 24 das Eduktgas EG in die zweite Abtrennvorrichtung 7. Das Eduktgas EG fungiert hierbei als Strippgas. Das Eduktgas EG wird in der zweiten Abtrennvorrichtung mit Wasser W beladen und verlässt die zweite Abtrennvorrichtung 7 danach über die achte Leitung 27. Feuchte Komponenten werden zunächst aus dem Eduktgas EG in einem Wärmetauscher 11 kondensiert. In einer weiteren dritten Abtrennvorrichtung 8, insbesondere einem Gas-Flüssig-Separator, wird nun Wasser W vom Eduktgas EG getrennt. Das Wasser W wird über die dritte Leitung 22 zurück zum Anodenraum 16 geführt. Das Eduktgas EG wird in der neunten Leitung 28 von der dritten Abtrennvorrichtung 8 zur fünften Eduktgas-führenden Leitung 24 geführt.

In der neunten Leitung 28 befindet sich eine Gebläseeinheit 9. Vorteilhaft erhöht diese Gebläseeinheit 9 den Volumenstrom des Eduktgases EG, sodass das Eduktgas EG ausreichend viel Wasser W aus dem Katholyten K heraustrennt. Auch das Anodengas AG wird in einer vierten Abtrennvorrichtung 10 vom Anolyt A getrennt.

In dieser Kohlenstoffdioxid-Elektrolysezelle 2 wird das Kohlenstoffdioxid CO₂, welches die Hauptkomponente des Eduktgases EG ist, zu Kohlenstoffmonoxid CO reduziert. Das Produktgas PG umfasst insbesondere Kohlenstoffmonoxid CO und nicht reduziertes Kohlenstoffdioxid CO₂. An der Anode A wird als Anodengas AG Sauerstoff O₂ produziert. Als Katholyt werden insbesondere wässrige Lösungen aus Kaliumsulfat, Kaliumhydrogencarbonat oder Kaliumphosphat verwendet. Es können auch weitere Sulfate, Hydrogencarbonate und Phosphate eingesetzt werden. Auch Mischungen dieser Stoffe sind möglich. Allgemein muss eine möglichst hohe Leitfähigkeit des wässrigen Katholyts vorliegen, ohne dass Salze ausfallen. Typischerweise liegen diese wässrigen Lösungen mit Salzkonzentrationen von 0,5 mol/l bis 1 mol/l vor.

Durch das direkte Aufbringen der Anode auf der Membran, wird als Anolyt Wasser verwendet. Es ist aber ebenso möglich, die oben zum Katholyt genannten Salze zu verwenden.

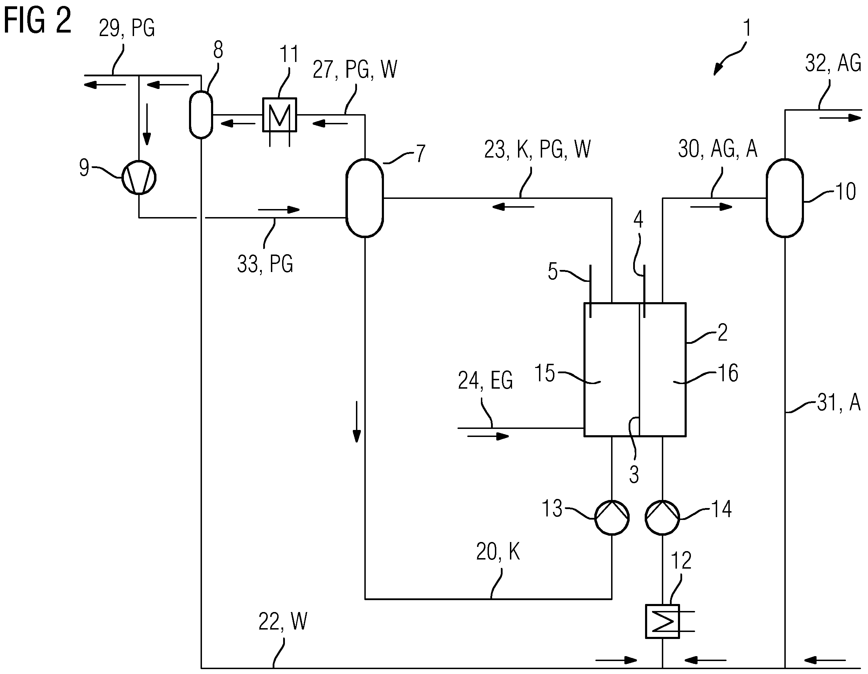

Figur 2 zeigt eine Ausgestaltung der Erfindung mit einer Elektrolysevorrichtung 1, in welcher das Produktgas PG zum Strippen des Wassers W aus dem Katholyt K verwendet wird. Wie in Figur 1 gezeigt, umfasst die Elektrolysevorrichtung 1 eine Elektrolysevorrichtung 2 mit einer Membran 3, einer Anode 4, einer Kathode 5 und einem Anodenraum 16, der durch die Membran 3 vom Kathodenraum 15 getrennt wird.

Das Eduktgas EG wird über eine fünfte Leitung 24 in die Elektrolysezelle 2 eingeleitet. Das Eduktgas EG umfasst Kohlenstoffdioxid CO₂, welches in den Kathodenraum 15 zu Kohlenstoffmonoxid CO reduziert wird. Der mit Wasser W angereicherte Katholyt K verlässt zusammen mit dem Produktgas PG, umfassend Kohlenstoffmonoxid CO und nicht reduziertes Kohlenstoffdioxid CO₂, über die vierte Leitung 23 die Elektrolysezelle 2 zur zweiten Abtrennvorrichtung 7.

In diesem Ausführungsbeispiel sind die erste Abtrennvorrichtung 6 und die zweite Abtrennvorrichtung 7 in einer Vorrichtung zusammengelegt. Besonders vorteilhaft ist die zweite Abtrennvorrichtung 7 in diesem Fall eine Blasensäule. Das Kohlenstoffmonoxid CO und Kohlenstoffdioxid CO₂ umfassende Produktgas PG wird hierbei mittels der vierten Leitung 23 in die zweite Abtrennvorrichtung 7 geführt. Dort wird das Produktgas PG mit Wasser W angereichert und verlässt über die achte Leitung 27 die zweite Abtrennvorrichtung 7. Das Produktgas PG und das Wasser W werden nun über einen ersten Wärmetauscher 11 geführt, wo schon ein Anteil Wasser W kondensiert wird. Die beiden Phasen werden anschließend in der dritten Abtrennvorrichtung 8 voneinander getrennt. Das Wasser W wird über die dritte Leitung 22 zurück in den Anodenraum 16 geführt. Das Produktgas PG wird über die zehnte Leitung 29 aus dem System teilweise hinausgeführt. Ein zweiter Anteil wird über die vierzehnte Leitung 33 zurück zur zweiten Abtrennvorrichtung 7 geführt.

Um den Volumenstrom zu erhöhen, wird in der vierzehnten Leitung 33 eine Gebläseeinheit 9 eingebracht. Vorteilhaft ist das Strippgas dann in ausreichender Menge vorhanden, um das überschüssige Wasser W aus dem Katholyt K abzutrennen. Der Katholyt K kann dann über die erste Leitung 20 zurück in den Kathodenraum 15 geführt werden. Die Pumpe 13 sorgt für den Transport des Katholyts K. Das an der Anode entstehende Sauerstoffgas, Anodengas AG, wird über die elfte Leitung 30 in die vierte Abtrennvorrichtung 10 geführt. In der vierten Abtrennvorrichtung 10 wird das Anodengas AG Sauerstoff von Anolyt A getrennt. Der Anolyt A wird über eine zwölfte Leitung 31 zurück in den Anodenraum 16 geführt. Das Anodengas AG Sauerstoff verlässt über eine dreizehnte Leitung 32 die Elektrolysevorrichtung 1.

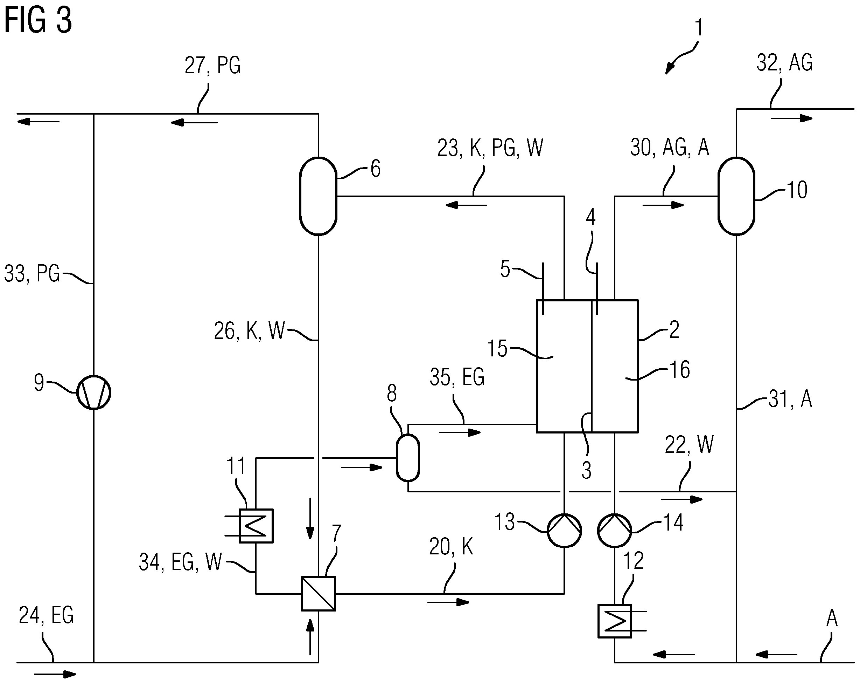

Figur 3 zeigt eine Elektrolysevorrichtung 1, bei der als Strippgas sowohl das Produktgas PG als auch das Eduktgas EG verwendet wird. Besonders vorteilhaft ist die zweite Abtrennvorrichtung 7 dann eine Pervaporationseinheit. Die Elektrolysezelle 2 umfasst, wie bereits in den ersten beiden Beispielen aufgeführt, eine Membran 3, eine Anode 4, eine Kathode 5, einen Anodenraum 16 und einen Kathodenraum 15.

Der während der Elektrolyse von Kohlenstoffdioxid CO₂ zu Kohlenstoffmonoxid CO mit Wasser W angereicherte Katholyt K wird über die vierte Leitung 23 in die erste Abtrennvorrichtung 6 geführt. Dort wird zunächst das Produktgas über die zehnte Leitung 29 ausgeführt. Der Katholyt K und das Wasser W verlassen über die siebte Leitung 26 die erste Abtrennvorrichtung 6 und gelangen zur zweiten Abtrennvorrichtung 7. In die zweite Abtrennvorrichtung 7, die Pervaporationseinheit, wird das Eduktgas EG und ein Anteil des Produktgases PG, welcher über die vierzehnte Leitung 33 zurückgeführt wurde, in die Pervaporationseinheit geführt. Über die Membran wird nun in das Edukt- und Produktgas EG, PG das Wasser W aus dem Katholyten K überführt.

Das Edukt- und Produktgas EG, PG und das Wasser W werden nun über die fünfzehnte Leitung 34 zunächst über einen ersten Wärmetauscher 11 geführt und anschließend in der dritten Abtrennvorrichtung 8 flüssige Komponenten von Gaskomponenten getrennt. Das Wasser W wird über die dritte Leitung 22 zurück in den Anodenraum 16 geführt. Das Edukt- und das Produktgas EG, PG werden über die sechzehnte Leitung 35 zurück in den Kathodenraum 15 geführt. Im Wärmetauscher 12 wird der Anolyt derart abgekühlt, dass er mit einer Temperatur von 20°C bis 95°C in den Anodenraum 16 zurückgeführt wird. Besonders bevorzugt wird er mit einer Temperatur von 70°C in den Anodenraum 16 zurückgeführt.

## Patentansprüche

1. Verfahren zur elektrochemischen Nutzung von Kohlenstoffdioxid (CO₂) mit folgenden Schritten:
- Bereitstellen einer Elektrolysezelle (2), wobei die Elektrolysezelle (2) eine Membran (3) umfasst, welche einen Anodenraum (16) von einem Kathodenraum (15) trennt,
- Führen eines ersten wässrigen Elektrolyten als Katholyt (K) in den Kathodenraum (15) und Führen eines zweiten wässrigen Elektrolyten als Anolyt (A) in den Anodenraum (16),
- Reduzieren des Kohlenstoffdioxids (CO₂) zu einem Produktgas (PG) umfassend Kohlenstoffmonoxid (CO),
- Abtrennen des Produktgases (PG) aus dem Katholyt (K) in einer ersten Abtrennvorrichtung (6),
- Abtrennen von überschüssigem Wasser des während der Reduktion von Kohlenstoffdioxid (CO₂) mit Wasser (W) aus dem Anolyt (A) angereicherten Katholyts (K) mittels eines Strippgases in einer zweiten Abtrennvorrichtung (7),
- Abtrennen des Wassers (W)aus dem Strippgas in einer dritten Abtrennvorrichtung (8),
- Zurückführen des Wassers (W) aus der dritten Abtrennvorrichtung (8) in den Anodenraum (16, wobei als Strippgas ein Kohlenstoffdioxid (CO₂) umfassendes Eduktgas (EG) und/ oder das Produktgas (PG) der Elektrolysezelle (2) verwendet wird.

2. Verfahren nach Anspruch 1, wobei der Volumenstrom des Strippgases mit Hilfe wenigstens einer Gebläseeinheit (9) erhöht wird.

3. Verfahren nach einem der Ansprüche 1 oder 2, wobei das Strippgas wenigstens teilweise nach dem Abtrennen des Wassers (W) als Eduktgas (EG) in die Elektrolysezelle (2) zurückgeführt wird.

4. Verfahren nach einem der vorhergehenden Ansprüche, wobei das Strippgas vor dem Eintritt in die zweite Abtrennvorrichtung (7) aufgeheizt wird.

5. Verfahren nach einem der vorhergehenden Ansprüche, wobei der von überschüssigem Wasser abgetrennte Katholyt (K) von der zweiten Abtrennvorrichtung (7) zurück in den Kathodenraum (15) geführt wird.

6. Verfahren nach einem der vorhergehenden Ansprüche, wobei aus dem Produktgas (PG) nach der ersten Abtrennvorrichtung (6) ein Anteil von maximal ein Achtel des Überschüssigen Wassers (W) mittels eines Kondensator abgetrennt wird.

7. Verfahren nach einem der vorhergehenden Ansprüche, wobei die erste Abtrennvorrichtung (6) und die zweite Abtrennvorrichtung (7) zusammengelegt werden und das Produktgas (EG) als Strippgas verwendet wird.

8. Elektrolysevorrichtung (1) zum Reduzieren von Kohlenstoffdioxid (CO₂) zu Kohlenstoffmonoxid (CO) mit:
- einer Elektrolysezelle (2), wobei die Elektrolysezelle (2) eine Membran (3) umfasst, welche einen Anodenraum (16) von einem Kathodenraum (15) trennt,
- einer ersten Leitung (20) zum Führen eines ersten Elektrolyten als Katholyt (K) in den Kathodenraum (15),
- einer zweiten Leitung (21) zum Führen eines zweiten Elektrolyten als Anolyt (A) in den Anodenraum (16),
- einer ersten Abtrennvorrichtung (6) zum Abtrennen eines Produktgases (PG) umfassend Kohlenstoffmonoxid (CO) von dem Katholyt (K),
- einer zweiten Abtrennvorrichtung (7) zum Abtrennen des überschüssigen Wassers des Katholyts (K) mittels eines Strippgases,
- einer dritten Abtrennvorrichtung (8) zum Abtrennen des Wassers (W) aus dem Strippgas,
- einer dritten Leitung (22) von der dritten Abtrennvorrichtung (8) zum Anodenraum (16) der Elektrolysezelle (2) zum Zurückführen des Wassers (W) in den Anodenraum (16), wobei die zweite Abtrennvorrichtung (7) mit einer sechsten Leitung (25) zum Führen des Eduktgases (EG) als Strippgas in die zweite Abtrennvorrichtung (7) oder mit einer vierzehnten Leitung (33) zum Führen des Produktgases (PG) als Strippgas in die zweite Abtrennvorrichtung (7) verbunden ist

9. Elektrolysevorrichtung (1) nach Anspruch 8, wobei die zweite Abtrennvorrichtung (7) eine Pervaporationseinheit, einen Fallfilmverdampfer oder eine Blasensäule umfasst.

10. Elektrolysevorrichtung (1) nach einem der Ansprüche 8 oder 9, wobei die Membran (3) eine Anode (A) umfasst.

11. Elektrolysevorrichtung (1) nach einem der Ansprüche 8 bis 10 mit wenigstens einer Gebläseeinheit (9), die in den Strippgas führenden Leitungen zum Erhöhen des Volumenstroms des Strippgases angeordnet ist.

## Claims

1. Method of electrochemical utilization of carbon dioxide (CO₂), comprising the following steps:
- providing an electrolysis cell (2), wherein the electrolysis cell (2) comprises a membrane (3) which separates an anode space (16) from a cathode space (15),
- guiding a first aqueous electrolyte as catholyte (K) into the cathode space (15) and guiding a second aqueous electrolyte as anolyte (A) into the anode space (16),
- reducing the carbon dioxide (CO₂) to a product gas (PG) comprising carbon monoxide (CO),
- separating the product gas (PG) from the catholyte (K) in a first separation apparatus (6),
- separating off excess water in the catholyte (K) enriched with water (W) from the anolyte (A) during the reduction of carbon dioxide (CO₂) by means of a stripping gas in a second separation apparatus (7),
- separating the water (W) from the stripping gas in a third separation apparatus (8),
- recycling the water (W) from the third separation apparatus (8) into the anode space (16), wherein the stripping gas used is a reactant gas (EG) comprising carbon dioxide (CO₂) and/or the product gas (PG) from the electrolysis cell (2).

2. Method according to Claim 1, wherein the volume flow rate of the stripping gas is increased with the aid of at least one fan unit (9).

3. Method according to either of Claims 1 and 2, wherein the stripping gas is at least partly recycled into the electrolysis cell (2) as reactant gas (EG) after the water (W) has been separated off.

4. Method according to any of the preceding claims, wherein the stripping gas is heated up prior to entry into the second separation apparatus (7).

5. Method according to any of the preceding claims, wherein the catholyte (K) separated from excess water is recycled from the second separation apparatus (7) into the cathode space (15).

6. Method according to any of the preceding claims, wherein a fraction not exceeding one eighth of the excess water (W) is separated from the product gas (PG) by means of a condenser downstream of the first separation apparatus (6).

7. Method according to any of the preceding claims, wherein the first separation apparatus (6) and the second separation apparatus (7) are combined and the product gas (EG) is used as stripping gas.

8. Electrolysis apparatus (1) for reducing carbon dioxide (CO₂) to carbon monoxide (CO), comprising:
- an electrolysis cell (2), wherein the electrolysis cell (2) comprises a membrane (3) which separates an anode space (16) from a cathode space (15),
- a first conduit (20) for guiding a first electrolyte as catholyte (K) into the cathode space (15),
- a second conduit (21) for guiding a second electrolyte as anolyte (A) into the anode space (16),
- a first separation apparatus (6) for separating a product gas (PG) comprising carbon monoxide (CO) from the catholyte (K),
- a second separation apparatus (7) for separating off the excess water in the catholyte (K) by means of a stripping gas,
- a third separation apparatus (8) for separating the water (W) from the stripping gas,
- a third conduit (22) from the third separation apparatus (8) to the anode space (16) of the electrolysis cell (2) for recycling the water (W) into the anode space (16), wherein the second separation apparatus (7) is connected to a sixth conduit (25) for guiding the reactant gas (EG) as stripping gas into the second separation apparatus (7) or to a fourteenth conduit (33) for guiding the product gas (PG) as stripping gas into the second separation apparatus (7).

9. Electrolysis apparatus (1) according to Claim 8, wherein the second separation apparatus (7) comprises a pervaporation unit, a falling-film evaporator or a bubble column.

10. Electrolysis apparatus (1) according to either of Claims 8 and 9, wherein the membrane (3) comprises an anode (A).

11. Electrolysis apparatus (1) according to any of Claims 8 to 10 having at least one fan unit (9) disposed in the conduits that guide stripping gas to increase the volume flow rate of the stripping gas.

## Revendications

1. Procédé d'utilisation électrochimique du dioxyde de carbone (CO₂), comprenant les stades suivants :
- on se procure une cellule (2) d'électrolyse, la cellule (2) d'électrolyse comprenant une membrane (3), qui sépare un compartiment (16) anodique d'un compartiment (15) cathodique,
- on envoie un premier électrolyte aqueux comme catholyte (K) au compartiment (15) cathodique et on envoie un deuxième électrolyte aqueux comme anolyte (A) au compartiment (16) anodique,
- on réduit le dioxyde de carbone (CO₂) en un produit gazeux (PG) comprenant du monoxyde de carbone (CO),
- on sépare le produit gazeux (PG) du catholyte (K) dans un premier dispositif (6) de séparation,
- on sépare, dans un deuxième dispositif (7) de séparation, au moyen d'un gaz d'entraînement, de l'eau en excès du catholyte (K) enrichi en eau (W) de l'anolyte (A) pendant la réduction du dioxyde (CO₂) de carbone,
- on sépare l'eau (W) du gaz d'entraînement dans un troisième dispositif (8) de séparation,
- on retourne l'eau (W) du troisième dispositif (8) de séparation au compartiment (16) anodique, en utilisant un éduit gazeux (EG) comprenant du dioxyde de carbone (CO₂) et/ou le produit gazeux (PG) de la cellule (2) d'électrolyse.

2. Procédé suivant la revendication 1, dans lequel on augmente le courant en volume du gaz d'entraînement à l'aide d'au moins un groupe (9) de soufflante.

3. Procédé suivant l'une des revendications 1 ou 2, dans lequel on renvoie le gaz d'entraînement, au moins en partie après la séparation de l'eau (W), comme éduit gazeux (EG) à la cellule (2) d'électrolyse.

4. Procédé suivant l'une des revendications précédentes, dans lequel on chauffe le gaz d'entraînement avant l'entrée dans le deuxième dispositif (7) de séparation.

5. Procédé suivant l'une des revendications précédentes, dans lequel on renvoie le catholyte (K), séparé de l'eau en excès, du deuxième dispositif (7) de séparation au compartiment (15) cathodique.

6. Procédé suivant l'une des revendications précédentes, dans lequel on sépare, au moyen d'un condenseur, du produit gazeux (PG) après le premier dispositif (6) de séparation, une proportion au maximum d'un huitième de l'eau (W) en excès.

7. Procédé suivant l'une des revendications précédentes, dans lequel on regroupe le premier dispositif (6) de séparation et le deuxième dispositif (7) de séparation et on utilise le produit gazeux (EG) comme gaz d'entraînement.

8. Dispositif (1) d'électrolyse pour réduire du dioxyde de carbone (CO₂) en monoxyde de carbone (CO), comprenant :
- une cellule (2) d'électrolyse, la cellule (2) d'électrolyse comprenant une membrane (3), qui sépare un compartiment (16) anodique d'un compartiment (15) cathodique,
- un premier conduit (20) pour envoyer un premier électrolyte, comme catholyte (K), au compartiment (15) cathodique,
- un deuxième conduit (21) pour envoyer un deuxième électrolyte, comme anolyte (A) au compartiment (16) anodique,
- un premier dispositif (6) de séparation pour séparer du catholyte (K) un produit gazeux (PG) comprenant du monoxyde de carbone (CO),
- un deuxième dispositif (7) de séparation pour séparer l'eau en excès du catholyte (K) au moyen d'un gaz d'entraînement,
- un troisième dispositif (8) de séparation pour séparer l'eau (W) du gaz d'entraînement,
- un troisième conduit (22) allant du troisième dispositif (8) de séparation au compartiment (16) anodique de la cellule (2) d'électrolyse pour retourner l'eau (W) au compartiment (16) anodique, le deuxième dispositif (7) de séparation communiquant avec un sixième conduit (25) pour envoyer l'éduit gazeux (EG), comme gaz d'entraînement, au deuxième dispositif (7) de séparation ou avec un quatorzième conduit (33) pour envoyer le produit gazeux (PG), comme gaz d'entraînement, au deuxième dispositif (7) de séparation.

9. Dispositif (1) d'électrolyse suivant la revendication 8, dans lequel le deuxième dispositif (7) de séparation est une unité de pervaporation, un évaporateur à flot tombant ou une colonne à bulles.

10. Dispositif (1) d'électrolyse suivant l'une des revendications 8 ou 9, dans lequel la membrane (3) comprend une anode (A).

11. Dispositif (1) d'électrolyse suivant l'une des revendication 8 à 10, comprenant au moins un groupe (9) de soufflante, qui est monté dans les conduits conduisant du gaz d'entraînement, afin d'augmenter le courant en volume du gaz d'entraînement.
